# EUROPÄISCHE PATENTSCHRIFT

(11) **EP 4 131 716 B1**
(45) Veröffentlichungstag und Bekanntmachung des Hinweises auf die Patenterteilung: **02.09.2026**
(21) Anmeldenummer: 22184676.9
(22) Anmeldetag: 13.07.2022
(51) Int. Cl.: H02J 7/90, H02J 7/62, H02J 7/00

(54) **AKKUPACK MIT STROMBEGRENZUNG**
RECHARGEABLE BATTERY PACK WITH CURRENT LIMITING
BLOC D'ACCUMULATEUR À LIMITATION DE COURANT

(30) Priorität: 03.08.2021 DE 102021120180
(43) Veröffentlichungstag der Anmeldung: 08.02.2023
(73) Patentinhaber: Einhell Germany AG, 94405 Landau / Isar (DE)
(72) Erfinder: MAYR, Stefan, 94405 Landau (DE)
(74) Vertreter: Hofstetter, Schurack & Partner

(56) Entgegenhaltungen:
- EP-A1- 3 851 252
- US-A1- 2008 252 263
- US-A1- 2017 194 670

## Beschreibung

Die vorliegende Erfindung betrifft ein Akkupack für ein Elektrogerät mit wenigstens einer Akkumulatorzelle und ein Verfahren zum Betreiben eines Elektrogeräts.

Akkumulatorzellen, beispielsweise Lithium-Ionen-Akkumulatorzellen, wie sie unter anderem in Akkupacks für Elektrowerkzeuge oder sonstige Elektrogeräte, wie etwa Gartengeräte oder Haushaltsgeräte, eingesetzt werden, enthalten in der Regel Komponenten oder Bauelemente, deren Temperatur begrenzt werden muss, um eine Zerstörung der Komponenten zu verhindern, was gegebenenfalls zu der Zerstörung der Akkumulatorzelle und des gesamten Akkupacks führen könnte, was mit einer entsprechenden Gefährdung von Personen einherginge. Solche temperaturempfindlichen Komponenten können beispielsweise ein Separator der Akkumulatorzelle, welcher Kathode und Anode voneinander trennt, oder eine SEl-Schicht (englisch: "solid electrolyte interface") sein.

Da die Temperatur im Inneren der Akkumulatorzelle und damit direkt an den temperaturempfindlichen Komponenten nicht direkt messbar ist, kann eine Überwachung und -begrenzung einer Temperatur außerhalb der Akkumulatorzelle an einer anderen Stelle im Akkupack erfolgen, beispielsweise mittels eines Temperatursensors, der auf einem Schaltungsträger angeordnet ist, welcher auch ein Batteriemanagementsystem des Akkupacks enthält. Aufgrund der räumlichen Entfernung des Temperatursensors von den eigentlichen temperaturempfindlichen Komponenten und den entsprechenden Unsicherheiten, mit denen der gemessene Temperaturwert daher behaftet ist, sowie aufgrund der zeitlichen Verzögerung, mit der sich eine Temperaturänderung in der Akkumulatorzelle an dem Temperatursensor bemerkbar macht, ist so jedoch nur eine relativ ungenaue Überwachung möglich.

Dies führt dazu, dass die entsprechenden Temperaturschwellen tendenziell pessimistischer, also kleiner, gewählt werden, als dies eigentlich möglich wäre. Dies begrenzt die mögliche Leistungsabgabe des Akkupacks und schränkt daher die Verwendbarkeit des Akkupacks für Elektrogeräte mit hoher Leistungsaufnahme ein, sodass gegebenenfalls größere und/oder mehrere Akkupacks eingesetzt werden müssen.

Dokument US 2008/0252263 A1 beschreibt ein Batteriepack mit Lithium-Batteriezellen, einem analogen Thermosensorelement und einem analogen Schalter. Das Thermosensorelement erfasst in analoger Form eine Batterietemperatur und gibt ein Ausgabeverhinderungssignal aus, wenn die Batterietemperatur über einer ersten vorgegebenen Temperatur liegt. Das Schaltelement wird basierend auf dem Ausgabeverhinderungssignal in einen Zustand geschaltet, in dem verhindert wird, dass ein Strom durch die Lithium-Batteriezellen fließt.

Es ist eine Aufgabe der vorliegenden Erfindung, die mögliche Leistungsabgabe durch ein Akkupack für ein Elektrogerät zu erhöhen, ohne das Risiko für eine thermische Überlastung der Akkumulatorzellen zu erhöhen.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf der Idee, eine Maximalstromstärke für den Entladestrom abhängig von einer elektrischen oder thermischen Messgröße, welche eine Temperatur einer Akkumulatorzelle eines Akkupacks betrifft, festzulegen.

Gemäß einem Aspekt der Erfindung wird ein Akkupack für ein Elektrogerät, insbesondere ein Elektrowerkzeug, gemäß Anspruch 1 angegeben.

Gemäß zumindest einer Ausführungsform ist der Steuerschaltkreis, beispielsweise einen Zeitschaltkreis des Steuerschaltkreises, dazu eingerichtet, zu bestimmen, ob die Stromstärke des Entladestroms für eine vorgegebene Maximalzeitdauer zwischen einem vorgegebenen zweiten Wert und dem ersten Wert liegt, insbesondere wenn beziehungsweise nachdem die Maximalstromstärke auf den ersten Wert gesetzt wurde. Der zweite Wert ist dabei kleiner als der erste Wert. Der Steuerschaltkreis ist dazu eingerichtet, die Maximalstromstärke von dem ersten Wert auf den zweiten Wert zu verringern, wenn der Entladestrom für die Maximalzeitdauer zwischen dem zweiten Wert und dem ersten Wert liegt, insbesondere sobald der Entladestrom für die Maximalzeitdauer zwischen dem zweiten und dem ersten Wert liegt oder lag.

Die wenigstens eine Akkumulatorzelle ist insbesondere als wenigstens eine Lithium-Ionen-Akkumulatorzelle ausgestaltet, kann aber auch als wenigstens Akkumulatorzelle einer anderen Art beziehungsweise basierend auf einem anderen elektrochemischen System ausgestaltet sein.

Ist das Akkupack mit dem Elektrogerät verbunden, so kann das Akkupack das Elektrogerät mit dem Entladestrom und damit mit elektrischer Energie versorgen, insbesondere um einen Motor des Elektrogeräts anzutreiben.

Das Akkupack kann lösbar, insbesondere zerstörungsfrei lösbar, mit einem Gehäuse des Elektrogeräts verbunden werden, beispielsweise über eine Rastverbindung, eine Steckverbindung und/oder eine Klemmverbindung. Insbesondere kann die mechanische Verbindung des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrogeräts jeweilige Schnittstellen aufweisen.

Eine elektrische Verbindung der wenigstens einen Akkumulatorzelle mit dem Elektrogerät, insbesondere einem Motor des Elektrogeräts, kann beispielsweise über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Der Entladestrom der wenigstens einen Akkumulatorzelle kann insbesondere nur dann fließen, wenn das Akkupack elektrisch mit dem Elektrogerät beziehungsweise einem entsprechenden Gehäuse des Elektrogeräts und somit mit dem Motor des Elektrogeräts verbunden ist.

Bei der Temperatur der wenigstens einen Akkumulatorzelle kann es sich beispielsweise um eine Temperatur direkt an einer Oberfläche der wenigstens einen Akkumulatorzelle, beispielsweise an einer Oberfläche eines Zellgehäuses der wenigstens einen Akkumulatorzelle, handeln. Bei der Temperatur kann es sich insbesondere um eine Temperatur an einem Pol beziehungsweise an einer Stelle an der wenigstens einen Akkumulatorzelle, die einem Pol der wenigstens einen Akkumulatorzelle entspricht, handeln.

Eine Messgröße betrifft die Temperatur der wenigstens einen Akkumulatorzelle insbesondere dann, wenn die Temperatur direkt oder indirekt aus dem Wert der Messgröße ableitbar oder abschätzbar ist. Dazu können beispielsweise Modelle, insbesondere Batteriemodelle, dienen, die mehrere Messgrößen, beispielsweise die Temperatur, den Entladestrom, die Ausgangsspannung und/oder die Ausgangsleistung, berücksichtigen.

Bei der elektrischen oder thermischen Messgröße kann es sich um die Temperatur der wenigstens einen Akkumulatorzelle selbst handeln. In diesem Fall ist der Sensor insbesondere als Temperatursensor ausgestaltet, der an der entsprechenden Stelle der wenigstens einen Akkumulatorzelle angeordnet ist. Bei der elektrischen oder thermischen Messgröße kann es sich aber auch um den Entladestrom, eine Ausgangsspannung oder Klemmenspannung des Akkupacks oder der wenigstens einen Akkumulatorzelle um eine Ausgangsleistung des Akkupacks oder der wenigstens einen Akkumulatorzelle handeln. In diesem Fall kann der Sensor beispielsweise als Strom- und/oder Spannungssensor ausgestaltet sein. Da Entladestrom, Ausgangsspannung sowie Ausgangsleistung die Temperatur der wenigstens einen Akkumulatorzelle beeinflussen und umgekehrt, betreffen auch diese Messgrößen die Temperatur im vorgenannten Sinne.

Der erste und der zweite Wert für die Maximalstromstärke sind größer als null. Dies bedeutet insbesondere, dass die Verringerung der Maximalstromstärke von dem ersten Wert auf den zweiten Wert nicht einer Verringerung der Maximalstromstärke auf null entspricht, was einer Unterbrechung des Entladestroms gleichkäme.

Um zu bestimmen, ob die Stromstärke des Entladestroms für die vorgegebene Maximalzeitdauer zwischen dem zweiten Wert und dem ersten Wert liegt, kann der Zeitschaltkreis beispielsweise eine Zeitdauer bestimmen, für die die Stromstärke bereits zwischen dem zweiten und dem ersten Wert liegt und diese Zeitdauer mit der vorgegebenen Maximalzeitdauer vergleichen. Alternativ kann der Zeitschaltkreis beispielsweise dazu eingerichtet sein, einen Zeitgeber oder dergleichen zu starten, sobald die Stromstärke zwischen dem zweiten und dem ersten Wert liegt, insbesondere sobald die Stromstärke den zweiten Wert überschreitet. Alternativ kann der Zeitschaltkreis oder Strom- oder Spannungssignal erzeugen, das von der Zeitdauer abhängt, für die die Stromstärke bereits zwischen dem zweiten und dem ersten Wert liegt, und die Bestimmung entsprechend anhand des Strom- oder Spannungssignals vornehmen.

Der Steuerschaltkreis kann beispielsweise einem Batteriemanagementsystem des Akkupacks entsprechen oder einen Teil des Batteriemanagementsystems darstellen. Der Steuerschaltkreis beziehungsweise das Batteriemanagementsystem können beispielsweise auf einem Schaltungsträger, insbesondere einer Platine, des Akkupacks angeordnet sein. Beispielsweise kann der Steuerschaltkreis einen oder mehrere Mikrocontroller, anwendungsspezifische integrierte Schaltungen, ASICs, zentrale Prozessoreinheiten, CPUs, feldprogrammierbare Gate-Arrays, FPGAs, Einchipsysteme, SoC, oder sonstige integrierte Schaltkreise oder Recheneinheiten beinhalten. Der Steuerschaltkreis kann auch analoge oder digitale diskrete Schaltkreise aufweisen.

Insbesondere enthält das Akkupack ein Schaltelement, das von dem Steuerschaltkreis ansteuerbar ist, um den Entladestrom zu steuern oder zu regeln. Der Steuerschaltkreis kann das Schaltelement insbesondere öffnen, um den Entladestrom zu unterbrechen. Das Schaltelement kann beispielsweise einen oder mehrere Transistoren, beispielsweise Feldeffekttransistoren und/oder Bipolartransistoren, insbesondere Leistungstransistoren, beispielsweise Leistungs-MOSFETs, IGBTs und so weiter enthalten.

Die wenigstens eine Akkumulatorzelle kann beispielsweise aus genau einer Akkumulatorzelle bestehen. Alternativ kann die wenigstens eine Akkumulatorzelle beispielweise aus zwei oder mehr in Reihe zueinander geschalteten Akkumulatorzellen bestehen.

In einem Akkupack gemäß der Erfindung ist also durch den Sensor eine direkte oder indirekte Temperaturüberwachung der wenigstens einen Akkumulatorzelle vorgesehen. In einer Ausführungsform der Erfindung sind mindestens zwei voneinander und von null verschiedene Werte für die Maximalstromstärke des Entladestroms spezifiziert. Abhängig von dem Sensorsignal und damit abhängig von der Temperatur der wenigstens einen Akkumulatorzelle kann der höhere erste Wert für die Maximalstromstärke zeitlich begrenzt zugelassen werden. Durch die Verringerung der Maximalstromstärke von dem ersten Wert auf einen zweiten, kleineren Wert nach Ablauf der Maximalzeitdauer kann eine zu starke Erhitzung temperaturempfindlicher Komponenten der wenigstens einen Akkumulatorzelle dennoch vermieden werden.

Dadurch kann das erfindungsgemäße Akkupack eine kurzzeitig erhöhte Strom- oder Leistungsanforderung durch den Motor des Elektrogeräts bedienen, ohne dass das Risiko einer Überhitzung oder Überlastung der wenigstens einen Akkumulatorzelle zu befürchten ist. So können kurzzeitige Stromspitzen oder dergleichen, insbesondere bei Elektrogeräten mit kurzzeitig besonders hoher Leistungsaufnahme, gehandhabt werden. Letztlich kann dadurch die Anwendbarkeit des Akkupacks auf solche Elektrogeräte erweitert werden, ohne dass beispielsweise mehrere oder größere Akkupacks beziehungsweise eine Parallelschaltung mehrerer Akkumulatorzellen oder mehrerer Stränge von Akkumulatorzellen erforderlich sind, um bei gleichbleibender Ausgangsspannung die abgebbare Leistung zu erhöhen. Dies erlaubt es also, Akkupacks mit insgesamt weniger Akkumulatorzellen und dementsprechend geringerer Größe, geringerem Gewicht und geringeren Kosten einzusetzen.

Dem kommt entgegen, dass auch bei leistungsintensiven Anwendungen, also beim Einsatz von Elektrogeräten mit relativ hoher Leistungsaufnahme, etwa Kettensägen, Bohrhämmern und so weiter die tatsächlichen Stromspitzen nur für eine relativ kurze Zeit in der Größenordnung einiger Sekunden, etwa zwischen 1 s und 20 s oder dergleichen, erforderlich sind. Ein Benutzer des Elektrogeräts muss daher bei der bestimmungsgemäßen Verwendung des Elektrogeräts nicht damit rechnen, dass der Entladestrom bei kurzzeitig hoher Leistungsanforderung unterbrochen wird und dementsprechend der Motor des Elektrogeräts gestoppt wird. Mit der Erfindung geht also eine Verbesserung des Benutzerkomforts ebenso einher wie eine Zeitersparnis beim Durchführen leistungsintensiver Arbeiten mit dem Elektrogerät.

Gemäß zumindest einer Ausführungsform des Akkupacks ist der Sensor als Temperatursensor ausgestaltet und an der wenigstens einen Akkumulatorzelle oder in unmittelbarer Umgebung der wenigstens einen Akkumulatorzelle angeordnet, wobei die elektrische oder thermische Messgröße der Temperatur der wenigstens einen Akkumulatorzelle entspricht.

Mit anderen Worten ist der Temperatursensor insbesondere direkt an einem Zellgehäuse der wenigstens einen Akkumulatorzelle angeordnet, steht also in mechanischem Kontakt mit dem Zellgehäuse, oder er ist derart in unmittelbarer Umgebung der wenigstens einen Akkumulatorzelle angeordnet, dass sich zwischen dem Temperatursensor und dem Zellgehäuse der wenigstens einen Akkumulatorzelle keine weiteren Bauteile oder Komponenten des Akkupacks befinden.

Die Temperatur der wenigstens einen Akkumulatorzelle entspricht in solchen Ausführungsformen der Temperatur an der Stelle des Temperatursensors.

Der Temperatursensor kann beispielsweise als temperaturabhängiger Widerstand oder mit einem temperaturabhängigen Widerstand ausgestaltet sein, beispielsweise als oder mit einem NTC-Widerstand.

Auf diese Weise lässt sich eine direkte Überwachung der Temperatur der wenigstens einen Akkumulatorzelle erreichen, sodass geringere Toleranzen bei der Festlegung der Maximalstromstärke abhängig von dem Sensorsignal möglich sind und dementsprechend eine höhere Leistungsfähigkeit des Akkupacks erreicht werden kann.

Gemäß zumindest einer Ausführungsform ist das Akkupack als einreihiges Akkupack ausgestaltet. Unter einem einreihigen Akkupack kann dabei ein Akkupack verstanden werden, das genau eine Akkumulatorzelle enthält oder zwei oder mehr in Reihe geschaltete Akkumulatorzellen und darüber hinaus keine weiteren Akkumulatorzellen. Mit anderen Worten sind alle Akkumulatorzellen des Akkupacks ausschließlich in Reihe zueinander verschaltet.

Der Begriff des einreihigen Akkupacks kann dabei insbesondere in Abgrenzung zu einem mehrreihigen Akkupack verstanden werden. Ein mehrreihiges Akkupack enthält zwei oder mehr zueinander parallel geschaltete Akkumulatorzellen. Ein mehrreihiges Akkupack kann beispielsweise oder zwei oder mehr erste Akkumulatorzellen, die zueinander in Reihe geschaltet sind, sowie zwei oder mehr zweite Akkumulatorzellen, die ebenfalls zueinander in Reihe geschaltet sind, enthalten. Die ersten und zweiten Akkumulatorzellen sind beispielsweise parallel oder teilweise parallel zu den ersten Akkumulatorzellen geschaltet.

Mehrreihige Akkumulatorzellen haben einerseits den Vorteil bei einer gegebenen Ausgangsspannung einen höheren Gesamtausgangsstrom des Akkupacks und dementsprechend eine höhere Ausgangsleistung des Akkupacks bereitstellen zu können. Ein dementsprechender Nachteil mehrreihiger Akkupacks besteht in der größeren Anzahl von Akkumulatorzellen, dem damit einhergehenden größeren Gewicht des Akkupacks und dem größeren Bauraum des Akkupacks.

Dementsprechend ist die Erfindung besonders für einreihige Akkupacks von Vorteil, da hier die bereitstellbare Ausgangsleistung beziehungsweise der maximale Entladestrom noch stärker einen limitierenden Faktor bei der Anwendbarkeit des Akkupacks darstellt als bei mehrreihigen Akkupacks. Grundsätzlich ist die Erfindung jedoch auch für mehrreihige Akkupacks anwendbar, bei denen die abgebbare Leistung vorübergehend ebenfalls vorübergehend weiter erhöht werden kann.

Gemäß zumindest einer Ausführungsform ist der Temperatursensor an einem Pol der wenigstens einen Akkumulatorzelle angeordnet.

Beispielsweise kann jede Akkumulatorzelle der wenigstens einen Akkumulatorzelle ein Zellgehäuse aufweisen. An zwei Stellen des jeweiligen Zellgehäuses können dann die Elektroden der jeweiligen Akkumulatorzelle elektrisch kontaktiert werden. Diese Stellen können als Pole bezeichnet werden. Alternativ kann die wenigstens eine Akkumulatorzelle ein gemeinsames Zellgehäuse aufweisen mit zwei Stellen, an denen die in Reihe geschalteten Elektroden wenigstens einen Akkumulatorzelle kontaktiert werden können.

Das Zellgehäuse kann dabei als starr ausgestaltet sein, beispielsweise im Falle von zylindrischen oder prismatischen Akkumulatorzellen, oder als flexible Hülle, beispielsweise im Falle von Pouch-Akkumulatorzellen.

Die Anordnung des Temperatursensors an dem Pol ist besonders vorteilhaft, da die Pole der wenigstens einen Akkumulatorzelle tendenziell zum einen die Stellen in dem Akkupack und außerhalb der Akkumulatorzellen selbst mit der höchsten Temperatur darstellen. Zum anderen wirkt sich eine Temperaturänderung im Inneren der wenigstens einen Akkumulatorzelle außerhalb der Akkumulatorzellen am schnellsten an den Polen aus.

Gemäß zumindest einer Ausführungsform ist der Sensor als Stromsensor ausgestaltet, der dementsprechend angeordnet und dazu eingerichtet ist, das Sensorsignal abhängig von der Stromstärke des Entladestroms zu erzeugen.

Die Stromstärke des Entladestroms kann, insbesondere in Kombination mit weiteren elektrischen oder thermischen Messgrößen, beispielsweise unter anderem der Ausgangsspannung, über ein Batteriemodell Abschätzungen der Temperatur der wenigstens einen Akkumulatorzelle ermöglichen. Der Steuerschaltkreis kann in solchen Ausführungsformen die Maximalstromstärke beispielsweise abhängig von dem Sensorsignal und abhängig von einem oder mehreren weiteren Sensorsignalen, die mittels entsprechender weiterer Sensoren abhängig von der einen oder den mehreren weiteren Messgrößen erzeugt werden, setzen und/oder verändern, insbesondere verringern. Es sind dann beispielsweise entsprechende Wertebereiche für das Sensorsignal und das oder die weiteren Sensorsignale hinterlegt, welche gemäß dem Batteriemodell den angestrebten Temperaturbereichen entsprechen.

Gemäß zumindest einer Ausführungsform ist der Sensor als Spannungssensor ausgestaltet, der dazu eingerichtet und entsprechend angeordnet ist, das Sensorsignal abhängig von einer Ausgangsspannung der wenigstens einen Akkumulatorzellen zu erzeugen.

Die Ausgangsspannung kann, insbesondere in Kombination mit weiteren elektrischen oder thermischen Messgrößen, beispielsweise unter anderem dem Entladestrom, über ein Batteriemodell Abschätzungen der Temperatur der wenigstens einen Akkumulatorzelle ermöglichen. Der Steuerschaltkreis kann in solchen Ausführungsformen die Maximalstromstärke beispielsweise abhängig von dem Sensorsignal und abhängig von einem oder mehreren weiteren Sensorsignalen, die mittels entsprechender weiterer Sensoren abhängig von der einen oder den mehreren weiteren Messgrößen erzeugt werden, setzen und/oder verändern, insbesondere verringern. Es sind dann beispielsweise entsprechende Wertebereiche für das Sensorsignal und das oder die weiteren Sensorsignale hinterlegt, welche gemäß dem Batteriemodell den angestrebten Temperaturbereichen entsprechen.

Gemäß zumindest einer Ausführungsform ist der Steuerschaltkreis dazu eingerichtet, die Maximalstromstärke nur dann auf den ersten Wert zu setzen, wenn die Temperatur der wenigstens einen Akkumulatorzelle gemäß dem Sensorsignal kleiner ist als eine vorgegebene erste Maximaltemperatur.

Die erste Maximaltemperatur ist dabei derart ausgewählt und mit der Maximalzeitdauer abgestimmt, dass eine Schädigung der wenigstens einen Akkumulatorzelle mit hoher Zuverlässigkeit ausgeschlossen werden kann, wenn die Stromstärke für die Maximalzeitdauer zwischen dem ersten und dem zweiten Wert liegt, vorausgesetzt die Temperatur ist kleiner als die erste Maximaltemperatur.

Je nach Ausgestaltung der Akkumulatorzelle, des elektrochemischen Systems und je nach Positionierung des Sensors beziehungsweise Art des Sensors kann die erste Maximaltemperatur beispielsweise in einem Bereich zwischen 60 °C und 90 °C liegen. In einer beispielhaften Ausführungsform liegt die erste Maximaltemperatur bei 75 °C oder ungefähr 75 °C.

Gemäß zumindest einer Ausführungsform ist der Steuerschaltkreis dazu eingerichtet, die Maximalstromstärke zu einem ersten Zeitpunkt, zu dem die Temperatur der wenigstens einen Akkumulatorzelle gemäß dem Sensorsignal kleiner ist als die erste Maximaltemperatur, auf den ersten Wert zu setzen. Der Steuerschaltkreis ist dazu eingerichtet, die Maximalstromstärke zu einem zweiten Zeitpunkt, der nach dem ersten Zeitpunkt liegt und zudem die Temperatur der wenigstens einen Akkumulatorzelle gemäß dem Sensorsignal größer oder gleich der ersten Maximaltemperatur ist, auf den zweiten Wert zu setzen.

Insbesondere ist die Temperatur also zunächst kleiner als die erste Maximaltemperatur und, nachdem die Maximalstromstärke dementsprechend auf den ersten Wert gesetzt wurde, steigt die Temperatur über die erste Maximaltemperatur an, sodass der Steuerschaltkreis die Maximalstromstärke auf den zweiten Wert verringert.

Der Zeitschaltkreis ist dazu eingerichtet, zu bestimmen, ob zwischen dem zweiten Zeitpunkt und einem dritten Zeitpunkt, der nach dem zweiten Zeitpunkt liegt, wenigstens eine vorgegebene Abkühlzeit vergangen ist. Der Steuerschaltkreis ist dazu eingerichtet, die Maximalstromstärke zu dem dritten Zeitpunkt nur dann von dem zweiten Wert erneut auf den ersten Wert zu setzen, wenn zwischen dem zweiten Zeitpunkt und dem dritten Zeitpunkt wenigstens die Abkühlzeit vergangen ist und die Temperatur der wenigstens einen Akkumulatorzelle gemäß dem Sensorsignal zu dem dritten Zeitpunkt kleiner als die erste Maximaltemperatur ist. Mit anderen Worten kann die Abkühlzeit als Erholungszeit angesehen werden. Hat die Temperatur die erste Maximaltemperatur überschritten, so wird die Maximalstromstärke solange nicht zurück auf den ersten Wert gesetzt, solange nicht wenigstens die Abkühlzeit vergangen ist. Zusätzlich muss die Temperatur entsprechend unter die erste Maximaltemperatur gesunken sein.

Auf diese Weise wird eine ausreichende Erholung des elektrochemischen Systems der wenigstens einen Akkumulatorzelle nach Überschreiten der ersten Maximaltemperatur gewährleistet. Es wird also vermieden, dass in zu kurzfristig aufeinanderfolgenden Abständen die erste Maximaltemperatur wiederholt aufgrund eines hohen Entladestroms überschritten wird. So können die Sicherheit beziehungsweise die Lebensdauer der wenigstens einen Akkumulatorzelle weiter erhöht werden.

Gemäß zumindest einer Ausführungsform ist der Steuerschaltkreis dazu eingerichtet, den Entladestrom zu unterbrechen, wenn die Temperatur der wenigstens einen Akkumulatorzelle gemäß dem Sensorsignal größer oder gleich einer vorgegebenen zweiten Maximaltemperatur ist, die größer ist als die erste Maximaltemperatur.

Die zweite Maximaltemperatur kann beispielsweise 10 K bis 30 K, beispielsweise etwa 15 K größer sein als die erste Maximaltemperatur. Ist die erste Maximaltemperatur gleich 75 °C, so kann die zweite Maximaltemperatur in einer konkreten Ausführungsform beispielsweise gleich 90 °C sein.

Auf diese Weise kann eine Überhitzung oder Überlastung der wenigstens einen Akkumulatorzelle, beispielsweise bei entsprechend hohen Außentemperaturen, vermieden werden.

Gemäß zumindest einer Ausführungsform ist der Steuerschaltkreis dazu eingerichtet, die Unterbrechung des Entladestroms nur dann zu beenden, also insbesondere die Maximalstromstärke nach erfolgter Unterbrechung nur dann wieder auf den ersten oder zweiten Wert zu setzen, wenn die Temperatur der wenigstens einen Akkumulatorzelle gemäß dem Sensorsignal kleiner einer vorgegebenen dritten Maximaltemperatur ist, wobei die dritten Maximaltemperatur insbesondere kleiner ist als die erste und kleiner als die zweite Maximaltemperatur.

Beispielsweise kann die dritte Maximaltemperatur 20 K bis 40 K kleiner sein als die zweite Maximaltemperatur, beispielsweise 25 K kleiner.

Gemäß zumindest einer Ausführungsform weist das Akkupack einen weiteren Temperatursensor auf, der dazu eingerichtet und angeordnet ist, abhängig von einer weiteren Temperatur der wenigstens einen Akkumulatorzelle ein weiteres Sensorsignal zu erzeugen. Der Steuerschaltkreis ist dazu eingerichtet, den Entladestrom zu unterbrechen, wenn die weitere Temperatur der wenigstens einen Akkumulatorzelle gemäß dem weiteren Sensorsignal größer oder gleich einer vorgegebenen vierten Maximaltemperatur ist.

Die Temperatur der wenigstens einen Akkumulatorzelle ist im Allgemeinen von der weiteren Temperatur der wenigstens einen Akkumulatorzelle verschieden. Handelt es sich bei dem Sensor um einen Temperatursensor, so sind der Temperatursensor und der weitere Temperatursensor insbesondere an unterschiedlichen Positionen innerhalb des Akkupacks angeordnet. Insbesondere ist der weitere Temperatursensor nicht unmittelbar an einem Zellgehäuse der wenigstens einen Akkumulatorzelle angeordnet. Beispielsweise kann der weitere Temperatursensor auf dem Schaltungsträger angeordnet sein, beispielsweise auf einer der wenigstens einen Akkumulatorzelle abgewandten Seite des Schaltungsträgers.

Insbesondere wirkt sich eine Temperaturänderung im Inneren der wenigstens einen Akkumulatorzellen innerhalb kürzerer Zeit auf die Temperatur der Akkumulatorzelle aus als auf die weitere Temperatur der wenigstens einen Akkumulatorzelle. Dementsprechend kann die vierte Maximaltemperatur beispielsweise kleiner sein als die erste Maximaltemperatur.

Auf diese Weise kann ein zusätzliches Maß an Sicherheit erreicht werden.

Insbesondere kann nicht nur der Entladestrom sondern auch eine Umgebungstemperatur des Akkupacks für die Innentemperatur der wenigstens einen Akkumulatorzelle relevant sein. Eine sehr hohe Umgebungstemperatur kann daher beispielsweise durch die zusätzliche Überwachung anhand des weiteren Temperatursensors berücksichtigt werden.

Gemäß zumindest einer Ausführungsform ist der Steuerschaltkreis dazu eingerichtet, die Unterbrechung des Entladestroms, insbesondere die Unterbrechung, wenn die weitere Temperatur größer oder gleich der vierten Maximaltemperatur ist, nur dann zu beenden, wenn die weitere Temperatur der wenigstens einen Akkumulatorzelle gemäß dem weiteren Sensorsignal kleiner einer vorgegebenen fünften Maximaltemperatur ist.

Gemäß einem weiteren Aspekt der Erfindung wird auch ein Elektrogerät, insbesondere ein Elektrowerkzeug, mit einem erfindungsgemäßen Akkupack angegeben. Das Elektrogerät, insbesondere ein Motor des Elektrogeräts, ist dabei mittels des Entladestroms der wenigstens einen Akkumulatorzelle betreibbar.

Die einzelnen Akkumulatorzellen der wenigstens einen Akkumulatorzelle können beispielsweise dazu ausgelegt sein, dauerhaft jeweils eine elektrische Leistung im Bereich von 70 W bis 110 W abzugeben. Je nach Anzahl und Verschaltung der Akkumulatorzellen lässt sich daraus die maximale dauerhafte Leistungsaufnahme des Elektrogeräts oder die maximale dauerhafte Leistungsabgabe des Akkumulators berechnen.

Die elektrische Leistung von 70 W bis 110 W pro Akkumulatorzelle kann dabei beispielsweise abgegeben werden, wenn der Maximalstrom auf den zweiten Wert gesetzt ist. Gemäß der Erfindung kann diese Leistung überschritten werden, insbesondere kurzfristig, zum Beispiel wenn der Maximalstrom auf den ersten Wert gesetzt ist.

Beispielsweise kann das Elektrogerät als Kettensäge, als Bohrhammer, als Kappsäge, als Kreissäge, insbesondere als Tischkreissäge oder Handkreissäge, als Tauchsäge oder als Fliesenschneidemaschine ausgestaltet sein.

Wie bereits oben erläutert ist die Verwendung eines erfindungsgemäßen Akkupacks in solchen Elektrogeräten aufgrund der wenigstens kurzzeitigen hohen Leistungsaufnahme besonders vorteilhaft.

Gemäß einem weiteren Aspekt der Erfindung wird auch ein Verfahren zum Betreiben eines Elektrogeräts gemäß Anspruch 15 angegeben.

In verschiedenen Ausführungsformen wird bestimmt, insbesondere mittels eines Zeitschaltkreises des Akkupacks, beispielsweise des Steuerschaltkreises, ob die Stromstärke des Entladestroms für eine vorgegebene Maximalzeitdauer zwischen einem vorgegebenen zweiten Wert und dem ersten Wert liegt, wobei der zweite Wert kleiner ist als der erste Wert. Die Maximalstromstärke wird, insbesondere mittels des Steuerschaltkreises von dem ersten Wert auf den zweiten Wert verringert, wenn der Entladestrom für die Maximalzeitdauer zwischen dem zweiten Wert und dem ersten Wert liegt.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt. Der Schutzumfang Erfindung wird durch die unabhängigen Ansprüche definiert.

In den Figuren zeigen
- Fig. 1: schematisch eine beispielhafte Ausführungsform eines erfindungsgemäßen Elektrogeräts;
- Fig. 2: schematisch eine beispielhafte Ausführungsform eines erfindungsgemäßen Akkupacks;
- Fig. 3: ein Blockschaltbild einer weiteren beispielhaften Ausführungsform eines erfindungsgemäßen Akkupacks; und
- Fig. 4: schematisch exemplarische Temperaturverläufe an verschiedenen Positionen innerhalb eines Akkupacks.

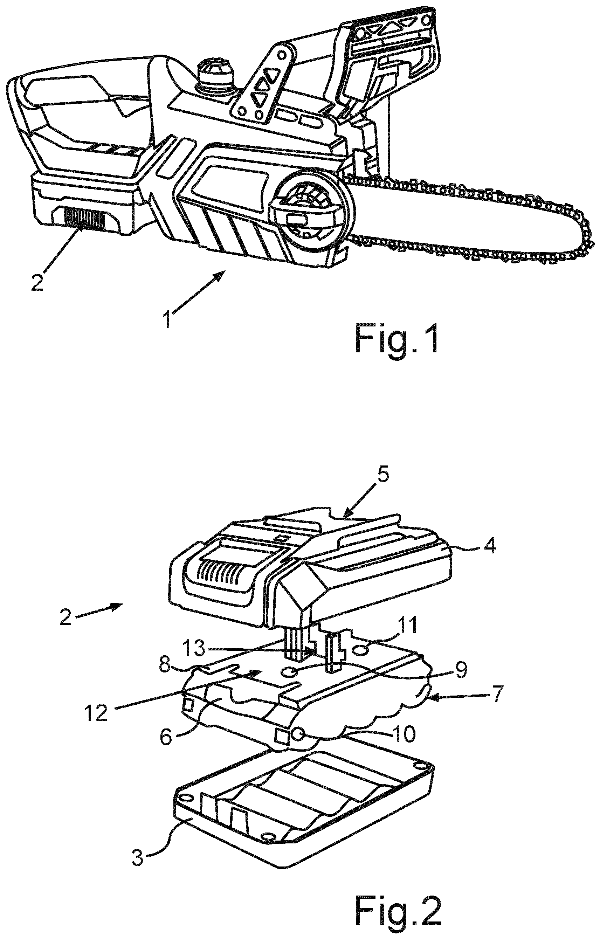

In Fig. 1 ist ein erfindungsgemäßes Elektrogerät 1 schematisch dargestellt, dass rein beispielhaft als akkubetreibbare Kettensäge ausgestaltet ist. Das Elektrogerät 1 weist ein erfindungsgemäßes Akkupack auf.

In Fig. 2 ist ein erfindungsgemäßes Akkupack schematisch in einer Explosionsdarstellung gezeigt, wie es beispielsweise für ein Elektrogerät 1 aus Fig. 1 verwendet werden kann.

Das Akkupack 2 weist mehrere in Reihe zueinander geschaltete Akkumulatorzellen 6 auf, die beispielsweise in einem Zellhalter 7 angeordnet sein können. Das Akkupack 2 weist außerdem beispielsweise eine Unterschale 3 und eine Oberschale 4 auf, die miteinander durch Steck- oder Klemmverbindungen verbunden werden können und einen Innenraum bilden, in dem die wenigstens eine Akkumulatorzelle 6 mit dem Zellhalter 7 angeordnet sein kann. Die Oberschale 4 weist einen Kontaktbereich 5 auf, um das durch Ober- und Unterschale 3, 4 gebildete Gehäuse mit einem entsprechenden weiteren Gehäuse des Elektrogeräts 1 mechanisch verbinden zu können. Auch eine elektrische Verbindung des Elektrogeräts 1 findet über den Kontaktbereich beziehungsweise im Innenraum liegende Kontakte 13, die über den Kontaktbereich 5 nach außen geführt werden, statt. Die Kontakte 13 sind mit der wenigstens einen Akkumulatorzelle 6 verbunden.

Das Akkupack 2 weist außerdem einen Schaltungsträger 8 auf, auf dem beispielsweise die Kontakte 13 angeordnet sein können. Des Weiteren ist ein Steuerschaltkreis 12 auf dem Schaltungsträger 8 angeordnet, der beispielsweise als Batteriemanagementsystem fungieren kann. Der Steuerschaltkreis 12 ist dazu eingerichtet, einen Entladestrom der wenigstens einen Akkumulatorzelle 6 zu regeln oder zu steuern und dementsprechend über die Kontakte 13 an das Elektrogerät abzugeben, wenn das Akkupack 2 an dem Elektrogerät 1 befestigt ist. Das Akkupack 2 weist ein Schaltelement 9, beispielsweise einen Leistungs-MOSFET, auf, das zwischen einem der Kontakte 13 und der wenigstens einen Akkumulatorzelle 6 angeordnet ist. Der Steuerschaltkreis 12 kann das Schaltelement 9 ansteuern, um den Entladestrom zu unterbrechen beziehungsweise die Unterbrechung des Entladestroms zu beenden.

Das Akkupack 2 weist im gezeigten Beispiel der Fig. 2 einen Temperatursensor 10 auf, der an einem Pol einer der Akkumulatorzellen 6 angeordnet und mit dem Steuerschaltkreis 12 verbunden ist. Der Temperatursensor 10 kann beispielsweise als NTC-Widerstand ausgestaltet sein.

Optional weist das Akkupack einen weiteren Temperatursensor 11 auf, der auf einer Oberseite, also einer den Akkumulatorzellen 6 abgewandten Seite, des Schaltungsträgers 8 angeordnet ist. Der weitere Temperatursensor 11 kann beispielsweise als NTC-Widerstand ausgestaltet sein.

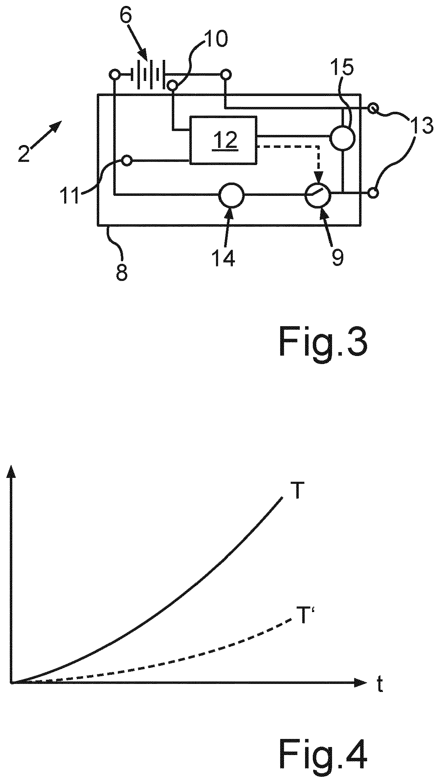

In Fig. 3 ist ein Blockschaltbild des Akkupacks 2 dargestellt. In Fig. 3 sind ein optionaler Stromsensor 14 zwischen einem der Kontakte 13 und der wenigstens einen Akkumulatorzelle 6 und ein optionaler Spannungssensor 15 zwischen den beiden Kontakten 13 gezeigt. Der Stromsensor 14 ist mit dem Steuerschaltkreis 12 verbunden, sodass der Steuerschaltkreis 12 über den Stromsensor 14 die Stromstärke des Entladestroms bestimmen kann. Entsprechend ist der optionale Spannungssensor 15 mit dem Steuerschaltkreis 12 verbunden, sodass der Steuerschaltkreis 12 gegebenenfalls die Ausgangsspannung zwischen den Kontakten 13 bestimmen kann.

Der Temperatursensor 10 erzeugt abhängig von der Temperatur an der wenigstens einen Akkumulatorzelle ein Temperatursensorsignal und übermittelt es an den Steuerschaltkreis 12. Der Steuerschaltkreis 12 kann nun den Entladestrom derart steuern oder regeln, dass die Stromstärke des Entladestroms stets kleiner ist als eine Maximalstromstärke, wobei der Steuerschaltkreis 12 die Maximalstromstärke abhängig von dem Temperatursenorsignal einstellen beziehungsweise setzen kann. Insbesondere kann der Steuerschaltkreis 12 das Schaltelement 9 öffnen, um den Entladestrom zu unterbrechen, wenn die Stromstärke des Entladestroms die Maximalstromstärke erreicht.

Hierbei sind insbesondere zwei voneinander verschiedene und von null verschiedene Werte für die Maximalstromstärke vorgegeben. Im konkreten Ausführungsbeispiel kann der erste Wert beispielsweise bei 50 A liegen und der zweite Wert beispielsweise bei 40 A. Je nach Anwendungsfall sind jedoch selbstverständlich andere von null verschiedene Werte möglich. Jedenfalls ist aber der zweite Wert kleiner als der erste Wert. Abhängig von dem Temperatursensorsignal setzt der Steuerschaltkreis 12 die Maximalstromstärke auf den ersten Wert. Insbesondere setzt der Steuerschaltkreis 12 die Maximalstromstärke nur dann auf den ersten Wert, wenn gemäß dem Temperatursensorsignal die Temperatur an der wenigstens einen Akkumulatorzelle 6 kleiner ist als eine vorgegebene erste Maximaltemperatur, beispielsweise 75 °C. In diesem Fall lässt der Steuerschaltkreis 12 A für eine vorgegebene Maximalzeitdauer, beispielsweise 10 s, eine Stromstärke des Entladestroms zu, die größer ist als der zweite Wert, also beispielsweise größer als 40 A, und kleiner als der erste Wert, also beispielsweise kleiner als 50 A. Liegt die Stromstärke des Entladestroms für die Maximalzeitdauer zwischen dem zweiten und dem ersten Wert, so verringert der Steuerschaltkreis die Maximalstromstärke auf den ersten Wert, um eine zu starke Erhitzung der wenigstens einen Akkumulatorzelle 6 durch den hohen Entladestrom zu vehindern.

Ist die Temperatur gemäß dem Temperatursensorsignal jedoch größer als die erste Maximaltemperatur, so lässt der Steuerschaltkreis 12 nur einen Entladestrom mit einer Stromstärke zu, die kleiner ist als der zweite Wert.

Beispielsweise kann auch eine absolute Obergrenze für die Temperatur gemäß dem Temperatursensorsignal vorgegeben sein. Insbesondere kann der Steuerschaltkreis 12 durch Öffnen des Schaltelements 9 den Entladestrom unterbrechen, wenn die Temperatur gemäß dem Temperatursensorsignal größer ist als eine vorgegebene zweite Maximaltemperatur, beispielsweise 90 °C.

Erfolgt eine solche Unterbrechung, kann der Steuerschaltkreis 12 die Unterbrechung beispielsweise nur dann aufheben, wenn die Temperatur gemäß dem Temperatursensorsignal unter eine dritte Maximaltemperatur, beispielsweise 65 °C, gefallen ist.

In Ausführungsformen, in denen das Akkupack 2 den weiteren Temperatursensor 11 enthält, kann der Steuerschaltkreis 12 auch die weitere Temperatur gemäß dem weiteren Temperatursensorsignal, welches der weitere Temperatursensor entsprechend erzeugen kann, bei der Steuerung oder Regelung des Entladestroms berücksichtigen.

Da im Beispiel der Fig. 2 der Temperatursensor 10 unmittelbar an der wenigstens einen Akkumulatorzelle 6, beispielsweise einem Pol der Akkumulatorzelle 6, angeordnet ist während der weitere Temperatursensor 11 weiter davon entfernt ist, insbesondere auf der Oberseite des Schaltungsträgers 8 angeordnet ist, macht sich eine Temperaturänderung im Inneren der wenigstens einen Akkumulatorzelle 6 in dem Temperatursensorsignal schneller bemerkbar als in dem weiteren Temperatursensorsignal. Dies ist in Fig. 4 schematisch durch den zeitlichen Verlauf der Temperaturen T, T' an den jeweiligen Positionen des Temperatursensors 10 beziehungsweise des weiteren Temperatursensors 11 bei einer konstanten Entladestromstärke gezeigt. Die Temperatur T gemäß dem Temperatursensorsignal steigt deutlich schneller an als die Temperatur T' gemäß dem weiteren Temperatursensorsignal.

Dementsprechend kann der Steuerschaltkreis 12 den Entladestrom beispielsweise durch öffnen des Schaltelements 9 auch dann unterbrechen, wenn die weitere Temperatur gemäß dem weiteren Temperatursensorsignal größer ist als eine vierte Maximaltemperatur, beispielsweise 70 °C.

Erfolgt eine solche Unterbrechung, kann der Steuerschaltkreis 12 die Unterbrechung beispielsweise nur dann aufheben, wenn die Temperatur gemäß dem Temperatursensorsignal unter eine fünfte Maximaltemperatur, beispielsweise 60 °C, gefallen ist.

Alternativ oder zusätzlich zu dem Temperatursensor 11 kann der Steuerschaltkreis zur Bestimmung des jeweiligen Werts für die Maximalstromstärke ein Stromsensorsignal des Stromsensors 14 und/oder ein Spannungssensorsignal des Spannungssensors 15 berücksichtigen. Die Ausgangsspannung, welche das Spannungssensorsignal darstellt, beziehungsweise der Entladestrom können über ein entsprechendes Batteriemodell Abschätzungen für eine Temperatur an oder in der wenigstens einen Akkumulatorzelle liefern. Dementsprechend kann der erste beziehungsweise der zweite Wert auch abhängig von diesen Messgrößen festgelegt werden.

Darüberhinaus wird angemerkt, dass die Einstellung der jeweiligen Maximalstromstärke nicht notwendigerweise mit dem Überschreiten bestimmter absoluter Werte für die Temperatur der wenigstens einen Akkumulatorzelle verknüpft sein muss. Vielmehr können auch Temperaturunterschiede zwischen der Temperatur gemäß dem Temperatursensorsignal und dem weiteren Temperatursensorsignal zur Festlegung der Maximalstromstärke verwendet werden. Auch die Festlegung der Maximalstromstärke abhängig von einem zeitlichen Verlauf der Temperatur oder einem zeitlichen Verlauf des Temperaturunterschieds und so weiter können alternativ oder zusätzlich implementiert werden.

Wie, insbesondere bezüglich der Figuren, erläutert wurde, ermöglicht es die Erfindung, die Strom- beziehungsweise Leistungsabgabe eines Akkupacks für ein Elektrogerät zu erhöhen. Ist die Temperatur an einer kritischen Stelle der wenigstens einen Akkumulatorzelle ausreichend gering, so kann die Begrenzung der Maximalstromstärke auf den zweiten Wert aufgehoben werden und durch eine Begrenzung auf den ersten Wert ersetzt werden. So kann verhindert werden, dass der Entladestrom bei kurzzeitigen hohen Leistungsanforderungen durch das Elektrogerät unterbrochen wird, obwohl die Temperatur der wenigstens einen Akkumulatorzelle noch in einem akzeptablen Bereich liegt. In bevorzugten Ausführungsformen kann die Erhöhung der Maximalstromstärke nach Ablauf der Maximalzeitdauer wieder rückgängig gemacht werden.

Im Betrieb des Akkupacks beziehungsweise des Elektrogeräts erwärmen sich die Akkumulatorzellen im Inneren. Zudem können sich auch weitere Komponenten des Akkupack oder der Akkumulatorzellen, etwa Linker, Kontakte, Schmelzsicherungen und so weiter, erwärmen. Auch diese zusätzlich erzeugte Wärme kann auf die Akkumulatorzellen übertragen werden und für einen zusätzlichen Temperaturanstieg sorgen. Beide Arten des Wärmeeintrags werden können in entsprechenden Ausführungsformen durch die Erfindung berücksichtigt werden.

### BEZUGSZEICHENLISTE:

- 1: Elektrogerät
- 2: Akkupack
- 3: Unterschale
- 4: Oberschale
- 5: Kontaktbereich
- 6: Akkumulatorzellen
- 7: Zellhalter
- 8: Schaltungsträger
- 9: Schaltelement
- 10: Temperatursensor
- 11: Temperatursensor
- 12: Steuerschaltkreis
- 13: Kontakte
- 14: Stromsensor
- 15: Spannungssensor

## Patentansprüche

1. Akkupack (2) für ein Elektrogerät (1) mit wenigstens einer Akkumulatorzelle (6), wobei
- das Akkupack (2) einen Sensor (10, 14, 15) aufweist, der dazu eingerichtet ist, abhängig von einer elektrischen oder thermischen Messgröße ein Sensorsignal zu erzeugen, wobei die elektrische oder thermische Messgröße eine Temperatur der wenigstens einen Akkumulatorzelle (6) betrifft;
- das Akkupack (2) einen Steuerschaltkreis (12) aufweist, der dazu eingerichtet ist, einen Entladestrom der wenigstens einen Akkumulatorzelle (6) zu steuern oder zu regeln, sodass eine Stromstärke des Entladestroms kleiner als eine Maximalstromstärke ist, die größer als Null ist und von dem Sensorsignal abhängt; und
- der Steuerschaltkreis (12) dazu eingerichtet ist, die Maximalstromstärke abhängig von dem Sensorsignal auf einen vorgegebenen ersten Wert zu setzen.

2. Akkupack (2) nach Anspruch 1, wobei der Sensor (10, 14, 15) als Temperatursensor (10) ausgestaltet ist und an der wenigstens einen Akkumulatorzelle (6) oder in unmittelbarer Umgebung der wenigstens einen Akkumulatorzelle (6) angeordnet ist, wobei die elektrische oder thermische Messgröße der Temperatur der wenigstens einen Akkumulatorzelle (6) entspricht.

3. Akkupack (2) nach Anspruch 2, wobei der Temperatursensor (10) an einem Pol der wenigstens einen Akkumulatorzelle (6) angeordnet ist.

4. Akkupack (2) nach Anspruch 1, wobei
- der Sensor (10, 14, 15) als Stromsensor (14) ausgestaltet ist, der dazu eingerichtet ist, das Sensorsignal abhängig von der Stromstärke des Entladestroms zu erzeugen; oder
- der Sensor (10, 14, 15) als Spannungssensor (15) ausgestaltet ist, der dazu eingerichtet ist, das Sensorsignal abhängig von einer Ausgangsspannung der wenigstens einen Akkumulatorzelle (6) zu erzeugen.

5. Akkupack (2) nach einem der vorhergehenden Ansprüche, wobei
- der Steuerschaltkreis (12) dazu eingerichtet ist, zu bestimmen, ob die Stromstärke des Entladestroms für eine vorgegebene Maximalzeitdauer zwischen einem vorgegebenen zweiten Wert und dem ersten Wert liegt, wobei der zweite Wert kleiner ist als der erste Wert; und
- der Steuerschaltkreis (12) dazu eingerichtet ist, die Maximalstromstärke von dem ersten Wert auf den zweiten Wert zu verringern, wenn der Entladestrom für die Maximalzeitdauer zwischen dem zweiten Wert und dem ersten Wert liegt.

6. Akkupack nach Anspruch 5, wobei der Steuerschaltkreis (12) dazu eingerichtet ist, die Maximalstromstärke nur dann auf den ersten Wert zu setzen, wenn die Temperatur der wenigstens einen Akkumulatorzelle (6) gemäß dem Sensorsignal kleiner als eine vorgegebene erste Maximaltemperatur ist.

7. Akkupack (2) nach Anspruch 6, wobei der Steuerschaltkreis (12) dazu eingerichtet ist, die Maximalstromstärke auf den zweiten Wert zu setzen, wenn die Temperatur der wenigstens einen Akkumulatorzelle (6) gemäß dem Sensorsignal größer oder gleich der ersten Maximaltemperatur ist.

8. Akkupack (2) nach Anspruch 7, wobei
- der Steuerschaltkreis (12) dazu eingerichtet ist, die Maximalstromstärke zu einem ersten Zeitpunkt, zu dem die Temperatur der wenigstens einen Akkumulatorzelle (6) gemäß dem Sensorsignal kleiner als die erste Maximaltemperatur ist, auf den ersten Wert zu setzen;
- der Steuerschaltkreis (12) dazu eingerichtet ist, die Maximalstromstärke zu einem zweiten Zeitpunkt, der nach dem ersten Zeitpunkt liegt und zu dem die Temperatur der wenigstens einen Akkumulatorzelle (6) gemäß dem Sensorsignal größer oder gleich der ersten Maximaltemperatur ist, auf den zweiten Wert zu setzen;
- der Steuerschaltkreis (12) dazu eingerichtet ist, zu bestimmen, ob zwischen dem zweiten Zeitpunkt und einem dritten Zeitpunkt, der nach dem zweiten Zeitpunkt liegt, wenigstens eine vorgegebene Abkühlzeit vergangen ist; und
- der Steuerschaltkreis (12) dazu eingerichtet ist, die Maximalstromstärke zu dem dritten Zeitpunkt nur dann von dem zweiten Wert auf den ersten Wert zu setzen, wenn zwischen dem zweiten Zeitpunkt und dem dritten Zeitpunkt wenigstens die Abkühlzeit vergangen ist und die Temperatur der wenigstens einen Akkumulatorzelle (6) gemäß dem Sensorsignal zu dem dritten Zeitpunkt kleiner als die erste Maximaltemperatur ist.

9. Akkupack (2) nach einem der Ansprüche 6 bis 8, wobei der Steuerschaltkreis (12) dazu eingerichtet ist, den Entladestrom zu unterbrechen, wenn die Temperatur der wenigstens einen Akkumulatorzelle (6) gemäß dem Sensorsignal größer oder gleich einer vorgegebenen zweiten Maximaltemperatur ist, die größer ist als die erste Maximaltemperatur.

10. Akkupack (2) nach Anspruch 9, wobei der Steuerschaltkreis (12) dazu eingerichtet ist, die Unterbrechung des Entladestroms nur dann zu beenden, wenn die Temperatur der wenigstens einen Akkumulatorzelle (6) gemäß dem Sensorsignal kleiner einer vorgegebenen dritten Maximaltemperatur ist.

11. Akkupack (2) nach einem der vorhergehenden Ansprüche, wobei
- das Akkupack (2) einen weiteren Temperatursensor (11) aufweist, der dazu eingerichtet ist, abhängig von einer weiteren Temperatur der wenigstens einen Akkumulatorzelle (6) ein weiteres Sensorsignal zu erzeugen;
- der Steuerschaltkreis (12) dazu eingerichtet ist, den Entladestrom zu unterbrechen, wenn die weitere Temperatur der wenigstens einen Akkumulatorzelle (6) gemäß dem weiteren Sensorsignal größer oder gleich einer vorgegebenen vierten Maximaltemperatur ist.

12. Akkupack (2) nach Anspruch 11, wobei der Steuerschaltkreis (12) dazu eingerichtet ist, die Unterbrechung des Entladestroms nur dann zu beenden, wenn die weitere Temperatur der wenigstens einen Akkumulatorzelle (6) gemäß dem weiteren Sensorsignal kleiner einer vorgegebenen fünften Maximaltemperatur ist.

13. Akkupack (2) nach einem der vorhergehenden Ansprüche, wobei das Akkupack (2) als einreihiges oder als mehrreihiges Akkupack (2) ausgestaltet ist.

14. Elektrogerät (1) mit einem Akkupack (2) nach einem der vorhergehenden Ansprüche, wobei das Elektrogerät (1) mittels des Entladestroms betreibbar ist.

15. Verfahren zum Betreiben eines Elektrogeräts (1), wobei
- mittels eines Akkupacks (2), das wenigstens eine Akkumulatorzelle (6) aufweist, ein Entladestrom der wenigstens einen Akkumulatorzelle (6) an das Elektrogerät (1) abgegeben wird;
- abhängig von einer elektrischen oder thermischen Messgröße ein Sensorsignal erzeugt wird, wobei die elektrische oder thermische Messgröße eine Temperatur der wenigstens einen Akkumulatorzelle (6) betrifft;
- der Entladestrom der wenigstens einen Akkumulatorzelle (6) gesteuert oder geregelt wird, sodass eine Stromstärke des Entladestroms kleiner als eine Maximalstromstärke ist, die größer als Null ist und von dem Sensorsignal abhängt; und
- die Maximalstromstärke abhängig von dem Sensorsignal auf einen vorgegebenen ersten Wert gesetzt wird.

## Claims

1. A battery pack (2) for an electric appliance (1) with at least one battery cell (6), wherein
- the battery pack (2) comprises a sensor (10, 14, 15), which is configured to generate a sensor signal depending on an electrical or thermal measurement quantity, wherein the electrical or thermal measurement quantity relates to a temperature of the at least one battery cell (6);
- the battery pack (2) comprises a control circuit (12), which is configured to control or regulate a discharge current of the at least one battery cell (6), such that a current strength of the discharge current is less than a maximum current strength, which is greater than zero and depends on the sensor signal; and
- the control circuit (12) is configured to set the maximum current strength to a preset first value depending on the sensor signal.

2. The battery pack (2) according to claim 1, wherein the sensor (10, 14, 15) is designed as a temperature sensor (10) and arranged at the at least one battery cell (6) or in immediate vicinity of the at least one battery cell (6), wherein the electrical or thermal measurement quantity corresponds to the temperature of the at least one battery cell (6).

3. The battery pack (2) according to claim 2, wherein the temperature sensor (10) is arranged at a terminal of the at least one battery cell (6).

4. The battery pack (2) according to claim 1, wherein
- the sensor (10, 14, 15) is designed as a current sensor (14), which is configured to generate the sensor signal depending on the current strength of the discharge current; or
- the sensor (10, 14, 15) is designed as a voltage sensor (15), which is configured to generate the sensor signal depending on an output voltage of the at least one battery cell (6).

5. The battery pack (2) according to any one of the preceding claims, wherein
- the control circuit (12) is configured to determine if the current strength of the discharge current is between a preset second value and the first value for a preset maximum period of time, wherein the second value is less than the first value; and
- the control circuit (12) is configured to reduce the maximum current strength from the first value to the second value if the discharge current is between the second value and the first value for the maximum period of time.

6. The battery pack according to claim 5, wherein the control circuit (12) is configured to set the maximum current strength to the first value only if the temperature of the at least one battery cell (6) is less than a preset first maximum temperature according to the sensor signal.

7. The battery pack (2) according to claim 6, wherein the control circuit (12) is configured to set the maximum current strength to the second value if the temperature of the at least one battery cell (6) is greater than or equal to the first maximum temperature according to the sensor signal.

8. The battery pack (2) according to claim 7, wherein
- the control circuit (12) is configured to set the maximum current strength to the first value at a first point of time, at which the temperature of the at least one battery cell (6) is less than the first maximum temperature according to the sensor signal;
- the control circuit (12) is configured to set the maximum current strength to the second value at a second point of time, which is after the first point of time and at which the temperature of the at least one battery cell (6) is greater than or equal to the first maximum temperature according to the sensor signal;
- the control circuit (12) is configured to determine if at least a preset cooling time has elapsed between the second point of time and a third point of time, which is after the second point of time; and
- the control circuit (12) is configured to set the maximum current strength from the second value to the first value at the third point of time only if at least the cooling time has elapsed between the second point of time and the third point of time and the temperature of the at least one battery cell (6) is less than the first maximum temperature at the third point of time according to the sensor signal.

9. The battery pack (2) according to any one of claims 6 to 8, wherein the control circuit (12) is configured to interrupt the discharge current if the temperature of the at least one battery cell (6) is greater than or equal to a preset second maximum temperature, which is greater than the first maximum temperature, according to the sensor signal.

10. The battery pack (2) according to claim 9, wherein the control circuit (12) is configured to terminate the interruption of the discharge current only if the temperature of the at least one battery cell (6) is less than a preset third maximum temperature according to the sensor signal.

11. The battery pack (2) according to any one of the preceding claims, wherein
- the battery pack (2) comprises a further temperature sensor (11), which is configured to generate a further sensor signal depending on a further temperature of the at least one battery cell (6);
- the control circuit (12) is configured to interrupt the discharge current if the further temperature of the at least one battery cell (6) is greater than or equal to a preset fourth maximum temperature according to the further sensor signal.

12. The battery pack (2) according to claim 11, wherein the control circuit (12) is configured to terminate the interruption of the discharge current only if the further temperature of the at least one battery cell (6) is less than a preset fifth maximum temperature according to the further sensor signal.

13. The battery pack (2) according to any one of the preceding claims, wherein the battery pack (2) is designed as a single-row or as a multi-row battery pack (2).

14. An electric appliance (1) with a battery pack (2) according to any one of the preceding claims, wherein the electric appliance (1) is operable by means of the discharge current.

15. A method for operating an electric appliance (1), wherein
- by means of a battery pack (2), which comprises at least one battery cell (6), a discharge current of the at least one battery cell (6) is output to the electric appliance (1);
- depending on an electrical or thermal measurement quantity, a sensor signal is generated, wherein the electrical or thermal measurement quantity relates to a temperature of the at least one battery cell (6);
- the discharge current of the at least one battery cell (6) is controlled or regulated such that a current strength of the discharge current is less than a maximum current strength, which is greater than zero and depends on the sensor signal; and
- the maximum current strength is set to a preset first value depending on the sensor signal.

## Revendications

1. Bloc-batterie (2) pour un appareil électrique (1) avec au moins une cellule d'accumulateur (6),
- le bloc-batterie (2) comportant un capteur (10, 14, 15), qui est mis au point pour générer un signal de capteur en fonction d'une grandeur de mesure électrique ou thermique, la grandeur de mesure électrique ou thermique se rapportant à une température de l'au moins une cellule d'accumulateur (6) ;
- le bloc-batterie (2) comportant un circuit commutateur de commande (12), qui est mis au point pour commander ou réguler un courant de décharge de l'au moins une cellule d'accumulateur (6) si bien qu'une intensité de courant du courant de décharge est inférieure à une intensité de courant maximale, qui est supérieure à zéro et dépend du signal du capteur ; et
- le circuit commutateur de commande (12) étant mis au point pour régler l'intensité de courant maximale sur une première valeur prédéfinie en fonction du signal du capteur.

2. Bloc-batterie (2) selon la revendication 1, le capteur (10, 14, 15) étant configuré comme un capteur de température (10) et étant disposé sur l'au moins une cellule d'accumulateur (6) ou à proximité immédiate de l'au moins une cellule d'accumulateur (6), la grandeur de mesure électrique ou thermique correspondant à la température de l'au moins une cellule d'accumulateur (6).

3. Bloc-batterie (2) selon la revendication 2, le capteur de température (10) étant disposé sur un pôle de l'au moins une cellule d'accumulateur (6).

4. Bloc-batterie (2) selon la revendication 1,
- le capteur (10, 14, 15) étant configuré comme un capteur de courant (14), qui est mis au point pour générer le signal de capteur en fonction de l'intensité du courant de décharge ; ou
- le capteur (10, 14, 15) étant configuré comme un capteur de tension (15), qui est mis au point pour générer le signal de capteur en fonction d'une tension de sortie de l'au moins une cellule d'accumulateur (6).

5. Bloc-batterie (2) selon l'une des revendications précédentes,
- le circuit commutateur de commande (12) étant mis au point pour déterminer si l'intensité du courant de décharge se situe entre une deuxième valeur prédéfinie et la première valeur pendant une durée maximale prédéfinie, la deuxième valeur étant inférieure à la première valeur ; et
- le circuit commutateur de commande (12) étant mis au point pour réduire l'intensité de courant maximale de la première valeur à la deuxième valeur lorsque le courant de décharge se situe entre la deuxième valeur et la première valeur pendant la durée maximale.

6. Bloc-batterie selon la revendication 5, le circuit commutateur de commande (12) étant mis au point pour régler l'intensité de courant maximale à la première valeur seulement lorsque la température de l'au moins une cellule d'accumulateur (6) est selon le signal de capteur inférieure à une première température maximale prédéfinie.

7. Bloc-batterie (2) selon la revendication 6, le circuit commutateur de commande (12) étant mis au point pour régler l'intensité de courant maximale à la deuxième valeur lorsque la température de l'au moins une cellule d'accumulateur (6) est selon le signal de capteur supérieure ou égale à la première température maximale.

8. Bloc-batterie (2) selon la revendication 7,
- le circuit commutateur de commande (12) étant mis au point pour régler l'intensité de courant maximale à la première valeur à un premier moment auquel la température de l'au moins une cellule d'accumulateur (6) est en fonction du signal du capteur inférieure à la première température maximale ;
- le circuit commutateur de commande (12) étant mis au point pour régler l'intensité de courant maximale à la deuxième valeur à un deuxième moment, qui se trouve après le premier moment et auquel la température de l'au moins une cellule d'accumulateur (6) est selon le signal de capteur supérieure ou égale à la première température maximale ;
- le circuit commutateur de commande (12) étant mis au point pour déterminer si au moins un temps de refroidissement prédéfini s'est écoulé entre le deuxième moment et un troisième moment, qui se trouve après le deuxième moment ; et
- le circuit commutateur de commande (12) étant mis au point pour régler alors l'intensité de courant maximale de la deuxième valeur à la première valeur au troisième moment seulement lorsqu'au moins le temps de refroidissement s'est écoulé entre le deuxième moment et le troisième moment et que la température de l'au moins une cellule d'accumulateur (6) est inférieure selon le signal du capteur, à la première température maximale au troisième moment.

9. Bloc-batterie (2) selon l'une des revendications 6 à 8, le circuit commutateur de commande (12) étant mis au point pour interrompre le courant de décharge lorsque la température de l'au moins une cellule d'accumulateur (6) est selon le signal de capteur supérieure ou égale à une deuxième température maximale prédéfinie, qui est supérieure à la première température maximale.

10. Bloc-batterie (2) selon la revendication 9, le circuit commutateur de commande (12) étant mis au point pour mettre fin alors à l'interruption du courant de décharge seulement lorsque la température de l'au moins une cellule d'accumulateur (6) est selon le signal de capteur inférieure à une troisième température maximale prédéfinie.

11. Bloc-batterie (2) selon l'une des revendications précédentes,
- le bloc-batterie (2) comportant un autre capteur de température (11), qui est mis au point pour générer un autre signal de capteur en fonction d'une autre température de l'au moins une cellule d'accumulateur (6) ;
- le circuit commutateur de commande (12) étant mis au point pour interrompre le courant de décharge lorsque l'autre température de l'au moins une cellule d'accumulateur (6) est, selon l'autre signal de capteur, supérieure ou égale à une quatrième température maximale prédéfinie.

12. Bloc-batterie (2) selon la revendication 11, le circuit commutateur de commande (12) étant mis au point pour mettre fin alors à l'interruption du courant de décharge seulement lorsque l'autre température de l'au moins une cellule d'accumulateur (6) est selon l'autre signal de capteur inférieure à une cinquième température maximale prédéfinie.

13. Bloc-batterie (2) selon l'une des revendications précédentes, le bloc-batterie (2) étant configuré comme un bloc-batterie à une rangée ou comme un bloc-batterie à plusieurs rangées (2).

14. Appareil électrique (1) avec un bloc-batterie (2) selon l'une des revendications précédentes, l'appareil électrique (1) pouvant fonctionner au moyen du courant de décharge.

15. Procédé destiné à faire fonctionner un appareil électrique (1),
- un courant de décharge de l'au moins une cellule d'accumulateur (6) étant délivré à l'appareil électrique (1) au moyen d'un bloc-batterie (2), qui comporte au moins une cellule d'accumulateur (6) ;
- un signal de capteur étant généré en fonction d'une grandeur de mesure électrique ou thermique, la grandeur de mesure électrique ou thermique se rapportant à une température de l'au moins une cellule d'accumulateur (6) ;
- le courant de décharge de l'au moins une cellule d'accumulateur (6) étant commandé ou régulé si bien qu'une intensité de courant du courant de décharge est inférieure à une intensité de courant maximale, qui est supérieure à zéro et dépend du signal du capteur ; et
- l'intensité de courant maximale étant réglée à une première valeur prédéfinie en fonction du signal de capteur.
